# EUROPEAN PATENT SPECIFICATION

(11) **EP 2 978 659 B1**
(45) Date of publication and mention of the grant of the patent: **03.10.2018**
(21) Application number: 13720804.7
(22) Date of filing: 28.03.2013
(51) Int. Cl.: B62K 11/10, B62H 5/00, B62J 17/02, B62J 25/00, B62K 19/46, B62J 99/00

(54) **MOTOR SCOOTER**
MOTORROLLER
SCOOTER À MOTEUR

(43) Date of publication of application: 03.02.2016
(73) Proprietor: Hartmobile B.V., 1032 KA Amsterdam (NL)
(72) Inventor: ANEMA, Taeckle Jan, NL-1402 CB Bussum (NL); VAN BREUGEL, Tim, NL-1098 XA Amsterdam (NL); SCHUTTE, Johannes, NL-1055 DE Amsterdam (NL)
(74) Representative: De Vries & Metman
(86) International application number: PCT/EP2013/056755
(87) International publication number: WO 2014/154295

(56) References cited:
- EP-A1- 1 215 111
- EP-A1- 1 413 505
- EP-A1- 2 138 389
- EP-A1- 2 168 861
- EP-A1- 2 347 949
- EP-A1- 2 423 087
- JP-A- H1 179 026
- JP-A- H02 158 482
- JP-A- 2012 091 659
- JP-B2- 3 122 901
- US-A1- 2012 013 103
- US-A1- 2012 176 086

## Description

The present invention relates to a motor scooter, in particular to an electric motor scooter with an on-board rechargeable battery powering an electric motor to attain locomotion. Examples of such motor scooters are disclosed in EP 2 423 087 A1, EP 2 168 861 A1 and JP 2012 091659 A. JP 3122901 B2 discloses a motor scooter according to the preamble of claim 1.

Motor scooters in city traffic need to be agile in heavy traffic. For safety of the driver the motor scooter must have a robust construction. This generally results in a heavy construction, further weighted by the use of batteries and power electronics. When parked they can be easily damaged by falling aside.

It is an object of the invention to provide a robust and light weight motor scooter, reducing risk of damage in case the scooter falls.

The object of the invention is achieved with a motor scooter according to claim 1.

In this configuration the frame does not only provide support for drive modules, but also shields these parts against impact loads, e.g., during falling or collision with another vehicle or object. Moreover, it enables construction of the frame as a space frame combining robustness with light weight. The electric drive modules can be supported directly by the cross members or indirectly via one or more further constructional elements, such as a support plate or a connection board supported by a cross member of the frame.

The electric drive modules can for instance include power electronics, one or more charging units and/or one or more batteries, in particular removable and/or rechargeable batteries.

In a specific embodiment the frame sections of the main frame form a one-piece tubular loop, for instance a tubular section having its outer ends connected, e.g., at the head set. This reduces the number of mechanical joints in the frame construction and contributes to further structural strength.

To improve dissipation of heat generated during driving one or more of the electric drive modules can be thermo-conductively connected to the main frame. Thus the frame functions as a heat sink, thereby saving weight for additional cooling means, such as cooling fins.

The batteries are held in the battery box suspended between opposite sections of the frame to form a footboard. Such a battery box may for example comprise a openable top plate. Optionally, the battery box is provided with a sliding guide guiding slider elements on extensions of the top plate to allow movement of the top plate between a closing position closing off the battery box, and an upward position, enabling vertical insertion and subsequent tilting of a battery into the battery box. The top plate can for example be divided into rear and front top plate portions, the rear top plate portion being pivotable with respect to the battery box and the front top plate portion being pivotable with respect to the rear top plate portion, the movement of the front top plate portion being determined by the slider elements and the rear top plate portion.

To allow easy handling the battery may for example comprise a handle received in a recess in the battery box. The handle may for instance be a pivotable handle comprising an eccentric extension engaging an interior wall of the battery box to provide gradually increasing clamping force during pivoting of the handle into the recess. This clamping force can be used to clamp the battery to electric contacts guaranteeing good electric contact and preventing rattling.

Optionally, the battery and the battery box can comprise matching slide sections sliding into each other during movement of the handle into the recess. The slide sections can for example include a rearwardly extending lip at the lower front edge of the battery, and a vertical gap in a bottom of the battery box tightly receiving the lip.

In a specific embodiment, the front section of the main frame extends upwardly to a transverse top section of the main frame. The front section of the main frame may for example comprise a lower section slanting forwardly to a level above the front wheel, and an upper section slanting backwardly from the lower section towards the transverse top section of the main frame.

The frame may be provided with a head set rotatably receiving a steering frame in a manner allowing steering movements. The head set may comprise a head set pipe rotatably receiving a section of the steering frame, and extending from a top end of the frame to a lower cross member of the frame.

The motor scooter can be provided with a seat. In a specific embodiment, the seat is pivotable between a closed position of use covering one or more storage boxes, and an open position allowing access to the one or more storage boxes. To lock the seat in the closed position, the motor scooter may comprise a lock, e.g., comprising a release mechanism with an actuator, e.g. at or near a steering handle bar, to activate the release mechanism via a control cable connecting the actuator with the release mechanism. The control cable can be hidden from view by positioning it in a tubular section of the main frame. To this end the tubular section can be provided with passage openings. Preferably, the passage openings are at least partly surrounded by a connecting end of one of the cross members. This provides a local reinforcement effectively repairing weakening of the tubular frame section by the passage opening.

To improve stability of the motor scooter, it shows in front view a tangent line between a front wheel and a tangency point of the frame, which is not crossed by a front view contour line of the motor scooter. The battery box or footboard extends below the tangency point of the frame, the lower edges of the battery box or footboard are chamfered to keep distance from the tangent line. The risk of falling over to a flat position is substantially reduced due to the feature that a balance line crosses the tangent line perpendicularly at the tangency point of the frame, while the motor scooter has a center of gravity positioned at the same side of the balance line as the lower side of the motor scooter. The motor scooter is stabilized when it rests on the tangency point of the motor scooter frame and the risk of further toppling can effectively be reduced. In case of further toppling of the motor scooter, the motor scooter may return into this stable position if - in front view - a second balance line runs vertically through the tangency point of the frame when the motor scooter lays flat down on a surface, the second balance line being positioned between the center of gravity and the steer. The center of gravity of the motor scooter can for example be at the level of the battery box or footboard.

Optionally, the motor scooter may be provided with a self-winding reel for a charging cable with a plug accessible via a closeable opening in a front panel. To allow a compact arrangement of the internal motor scooter parts, the reel may for example comprise an axis of rotation substantially under a right angle with the front panel covering the reel, a cable guide system being provided to guide the cable to the opening in the front panel.

In a further aspect, a motor scooter is disclosed comprising a main frame and at least one cover panel. Sections of the main frame can be provided with recesses receiving one or more edge sections of the at least one cover panel. The frame sections may for example be tubular sections wherein the edge receiving recesses are slits in the tubular sections, the slits running substantially parallel to the longitudinal axis of the respective tubular sections. Due to this structure, the cover panel will accurately connect to the frame sections. Especially when the frame sections remain visible, there will be a constant spacing between the cover panels and the frame sections, which provides a high quality impression. The slits can be hidden from view if the cover panel edges received in the slits are offset from the outer surface of the cover panels.

As explained above, the tubular sections may for instance form a one-piece tubular loop bridged by cross members. To provide the motor scooter with a smooth outer surface the cover panels join each other with overlapping sections.

The cover panels may for example include a front cover panel covering a front side of a steering head set rotatably holding a steering frame, a bottom cover panel covering the lower side of a footboard and an inner cover panel covering the rear side of the steering head set. The front cover panel and the bottom cover panel are joined to each other with a joining edge locally recessed to form a passage for a front fork.

The motor scooter can for example have a rear wheel and a steerable front wheel. Alternatively, the motor scooter may have two or more rear wheels and/or two or more front wheels.

For further weight reduction, the frame of the motor scooter can be made of light weight materials, in particular a suitable aluminum alloy.

The invention will be further explained with reference to the accompanying drawings.
- Figure 1:: shows an exemplary embodiment of a motor scooter according to the invention in perspective view;
- Figure 2:: shows the motor scooter of Figure 1 in side view;
- Figure 3:: shows the motor scooter of Figure 1 in front view;
- Figure 4:: shows a frame of the motor scooter of Figure 1 in perspective view;
- Figure 5:: shows the frame of Figure 4 with power electronics and a charging unit;
- Figure 6:: shows the front section of the frame without cover panel;
- Figure 7:: shows the electric drive modules of the motor scooter of Figure 1;
- Figure 8:: shows in detail an opened battery box;
- Figure 9A-E:: shows consecutive steps of removal of a battery;
- Figure 10A:: shows in detail part of a front side of the battery box with an inserted battery;
- Figure 10B:: shows in detail part of a rear side of the battery box with an inserted battery;
- Figure 11:: shows the seat in opened position;

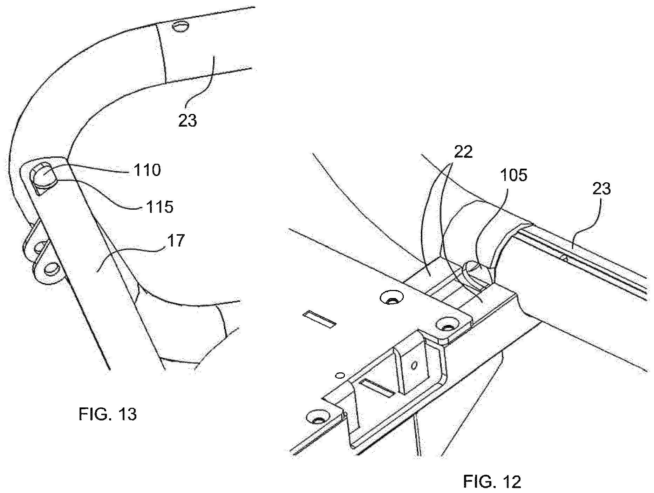

- Figure 12:: shows in detail a first passage opening for electronic wiring and a cable of a release mechanism of the seat;
- Figure 13:: shows in detail a second and a third passage opening for electronic wiring and a cable of the release mechanism;
- Figure 14:: shows the frame with cover panels in exploded view;
- Figure 15:: shows schematically in cross section the connection of the cover panels with the frame;
- Figure 16:: shows in detail the front section of the motor scooter with extended charge cable;
- Figure 17:: shows the motor scooter in tilted position.

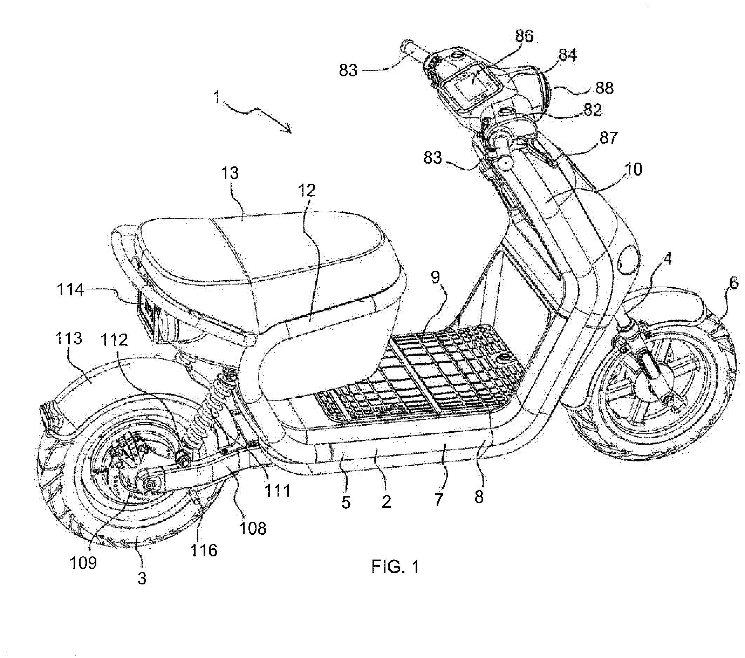

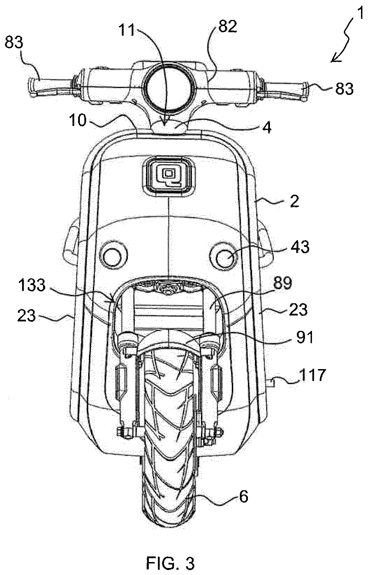

Figure 1 shows a motor scooter 1 comprising a main frame 2 connected to a rear wheel 3 through a rear wheel suspension, and a front steering frame 4 having a lower end with a front wheel 6 arranged in line with the rear wheel 3. The main frame 2 extends along an outline of a main body 5 of the motor scooter 1 and comprises a tubular loop 7 with substantially parallel mid-sections 8 at both lateral sides of a footboard 9. A front section 10 of the main frame 2 holds a head set 11 (see Figure 3) receiving the steering frame 4 in a rotatable manner. A rear section 12 of the main frame 2 supports a seat 13.

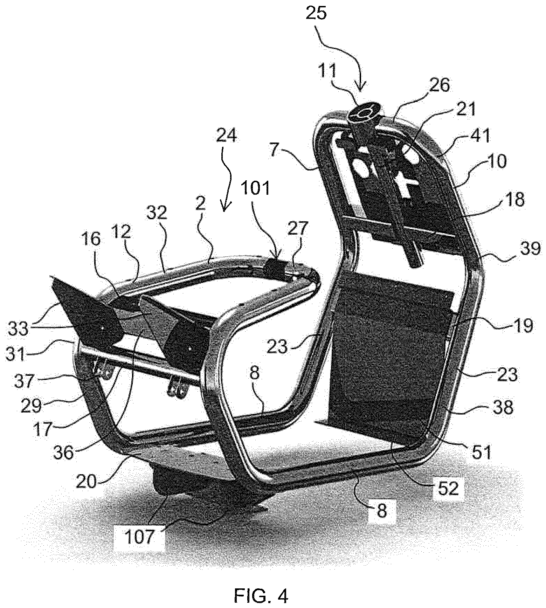

Figure 4 shows the main frame 2 separately. The main frame 2 comprises a one-piece tubular loop 7, a number of cross members 16, 17, 18, 19, 20 and a head set pipe 21. In the embodiment shown, the tubular loop 7 is symmetrical along a vertical midplane, which coincides with a longitudinal midplane of the motor scooter 1 in its assembled condition, the midplane extending in driving direction.

The main frame 2 comprises two lateral sections 23 curved to form a lower seat supporting end 24 at the rear section 12 of the frame 2 and a higher steer end 25 at the front section 10 of the frame 2. At the seat end 24 and the steer end 25 the two lateral sections 23 are connected by transversal terminal sections 26, 27. At a distance from the seat end terminal section 27 the tubular side sections 23 are bridged by a first and a second cross member 16, 17. The first cross member 16 has a substantially L-shaped cross section, while the second cross member 17 is tubular-shaped. Similarly, at the front section 10 of the frame 2 the lateral sections 23 are bridged by a third cross member 18 with a rectangular cross section at a distance below the steer end terminal section 26 and by a fourth cross member 19 with a rectangular cross section at a distance below the third cross member 18. The ends of the mid sections 8 near the rear section of the frame 2 are connected by a fifth cross member 20, which is formed as a strip. At the front section 10 the steer end terminal section 26 of the frame 2 is provided with the centrally positioned head set 11 for receiving the steer frame 4. The head set 11 comprises the head set pipe 21 extending downwardly from the steer end terminal section 26 of the frame 2 to cross the fourth cross member 19 centrally. The one piece circumferential tubular loop 7, the transversal cross members 16 - 20 and the downwardly extending headset pipe 21 form a strong and robust tubular frame protecting a driver without hindering stepping in or out and providing solid support for further parts of the motor scooter 1.

The rear section 12 of the frame 2 comprises a backwardly slanting lower part 29 extending from the mid section 8 of the frame 2 to the second cross member 17. The slanting angle of the lower part 29 is such that in the assembled condition of the motor scooter 1 the second cross member 17 is at a level above the rear wheel 3, about half way between the rear wheel center and the rear end of the footboard 9.

A curve 31 between the second and first cross members 16, 17 connects the lower part 29 of the rear section 12 to a forwardly inclined, nearly horizontal upper part 32 which is substantially U-shaped in top view to include the transversal seat end terminal section 27. In plan view the side parts of the U-shaped upper part 32 slightly converge towards the seat end terminal section 27.

Two parallel upwardly pointing triangular seat supports 33 extend backwardly to support top side flanges of a rear storage box as will be explained further on. The first cross member 16 has an L-shaped cross section with an upper flange 34 for supporting a top front flange of the rear storage box, and a lower flange 36. The triangular seat supports 33 are held between this lower flange 36 and the second cross member 17. The lower side of the second cross member 17 is provided with brackets 37 for connection to the top end connections of two respective shock absorbers.

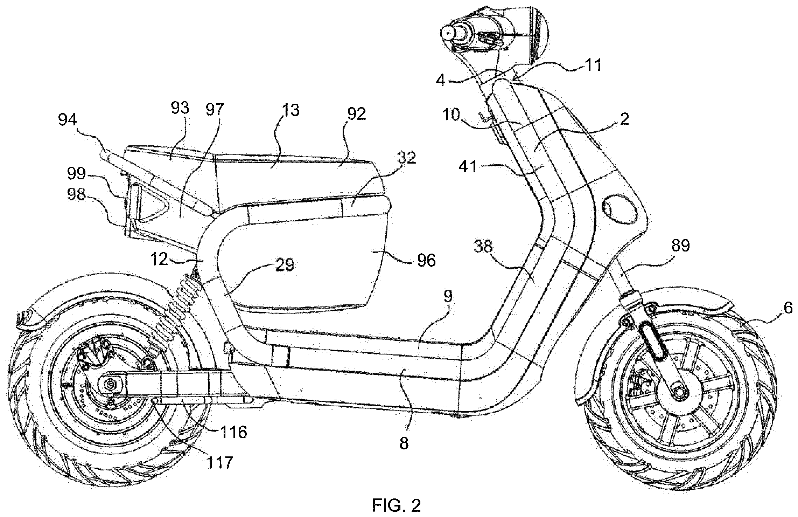

The front section 10 of the frame 2 comprises a lower part 38, upwardly extending in forward direction from the mid sections 8 to a curve 39 connecting the lower part 38 to a backwardly slanting upper part 41 of the front section 10. As shown in Figure 2, the lower part 38 and the upper part 41 make corresponding angles with the vertical but in opposite directions in the assembled state of the motor scooter 1. The curve 39 is positioned between the third and fourth cross members 18, 19. In the assembled condition of the motor scooter 1 the level of the curve 39 of the front section 10 substantially corresponds to the level of the terminal seat end 27 of the rear section 12 of the frame 2. In front view (see Figure 3) the tubular side parts 23 slightly converge towards the steer end terminal section 26 at the front section 10.

The lateral sections 23 of the frame and the terminal steer and seat end sections 26, 27 are formed by bent tubes attached to each other, e.g., by welding, to form a single tubular loop 7. The tubes are bent with a radius substantially larger than the tube diameter.

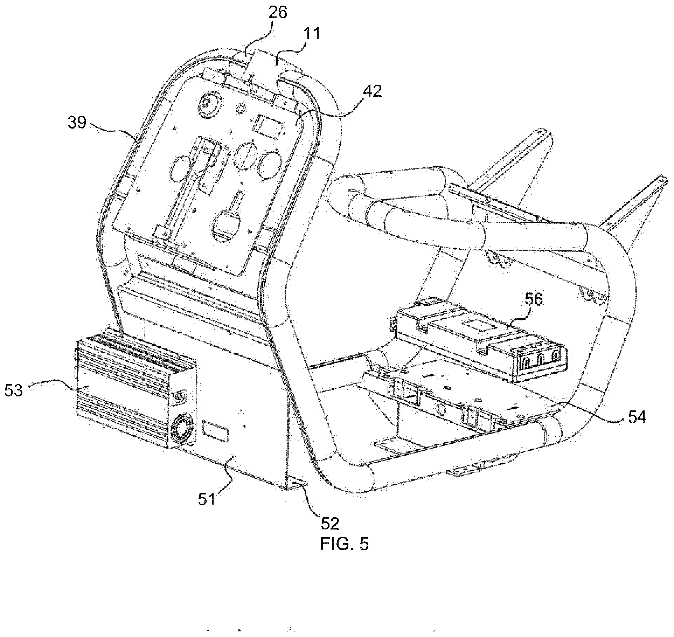

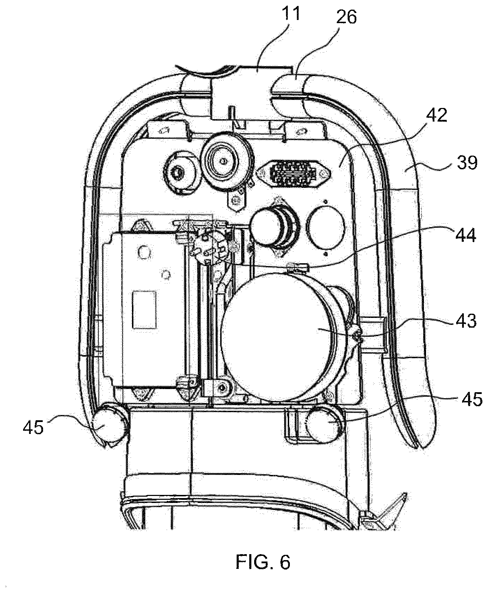

A connection board 42, particularly shown in Figure 5 and 6, is attached to the front side of the upper part 39 of the front section 10 for supporting electronics, e.g., for a headlamp, control electronics for a user display on the steering handle bar, a modem, such as a GPRS modem, GPS electronics, motion sensors, a reel 43 for a self-winding charge cable 44, direction indicators 45, and associated wiring and electronics (see Figure 6). The reel 43 for the self winding cable 44 is positioned such that the rotation axis of the reel is orthogonal to the connection board 42 to minimize required storage space of the charge cable 44.

A sheet 51 hangs down vertically from the fourth cross member 19 having a horizontal flange 52 at its lower end at the level of the midsection tubes 8 of the frame 2 to support the front edge of a battery box, as will be explained further on. A charging unit 53 is attached to the front side of the sheet 51 (see Figure 5). The charging unit 53 can be connected to the mains by the plug of the charge cable 44.

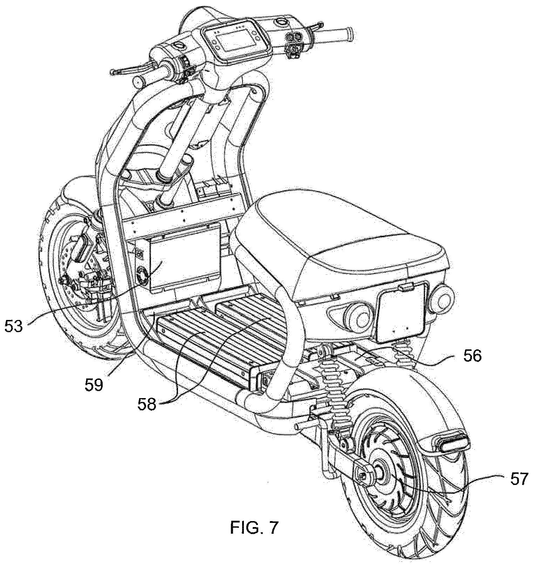

A further connection board 54 is attached on top of the fifth cross member 20 for carrying power electronics 56 operatively connected to an electric hub motor 57 integral in the rear wheel 3 (see Figure 7).

The sheet 51 and the connection board 54 are made of a thermoconductive material, such as aluminum or a suitable steel type. This results in a thermoconductive connection between the power electronics 56 and the tubular frame loop 7. Heat generated by the charge unit 53 and the power electronics 56 is efficiently dissipated via the frame loop 7 by wind caused by driving.

Figure 7 shows the electric drive modules of the motor scooter 1. The electric drive modules include power electronics 56, the charge unit 53 and two removable batteries 58 arranged within the footboard 9 for feeding the hub motor 57 via the power electronics 56. The removable batteries 58 are charged by the mains via the self winding charge cable 44 and the charging unit 53. The batteries 58 have a front end with a pivoting handle 59 allowing easy removal, which will be explained further on.

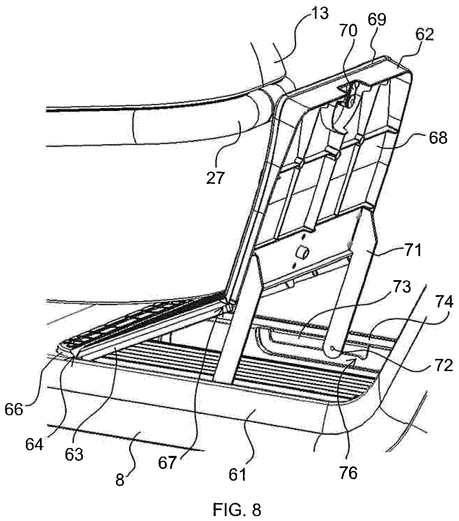

The footboard 9 is held between the two mid sections 8 of the frame 2 and forms a battery box 61 encasing the removable batteries 58. The battery box 61 can be closed by a top plate 62. The top plate 62 is pivotable to an open position, as shown in more detail in Figure 8. The top plate 62 has a rear top plate portion 63 with one side connected by a hinge 64 to a rear edge 66 of the battery box 61 and an opposite side connected by a hinge 67 to a front top plate portion 68 of the top plate 62. The front top plate portion 68 of the top plate 62 has a front edge 69 with a latch 70 for locking the top plate 62 in the closed position. The front top plate section 68 has two extensions forming slider arms 71 at opposite ends of the hinge 67 extending beyond the hinge 67. The two parallel slider arms 71 extend below the longitudinal sides of the rear top plate portion 63 of the top plate 62 and have free ends with slider pins 72 slidably received in guiding recesses 73 at the inner side of the battery box 61 near its top edge 74. The guiding recesses 73 are parallel to the top edge of the battery box 61. The slider arms 72 and the guiding recesses 73 translate upward movement of the front top plate portion 68 of the top plate 62 into upward hinging of the rear top plate portion 63.

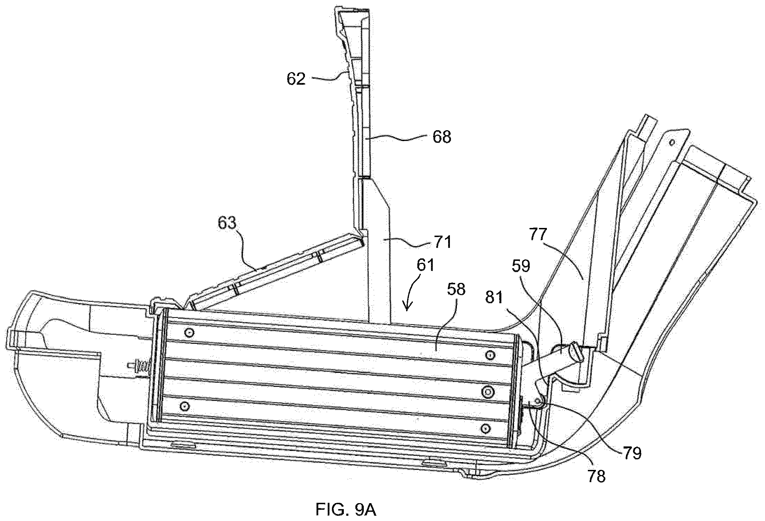

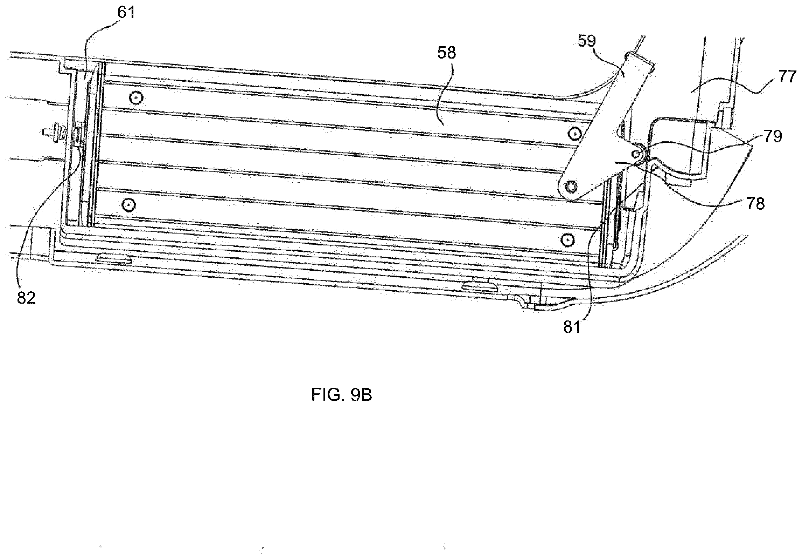

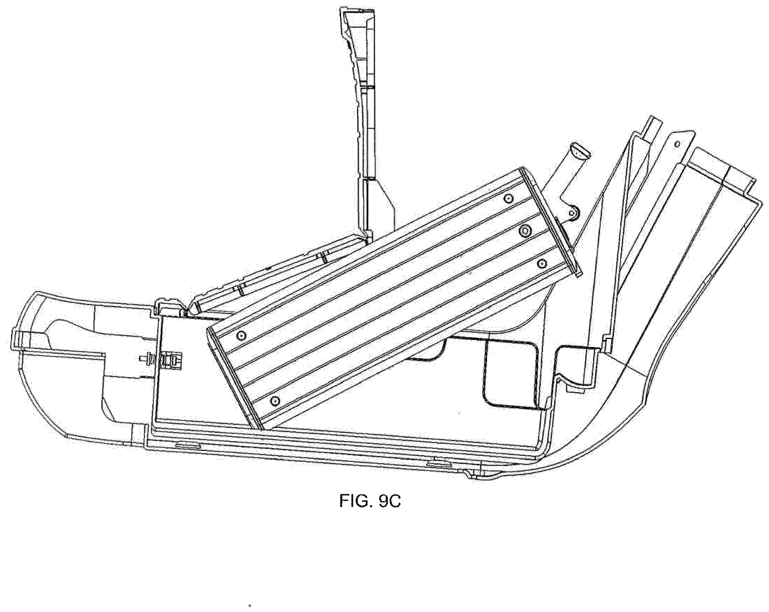

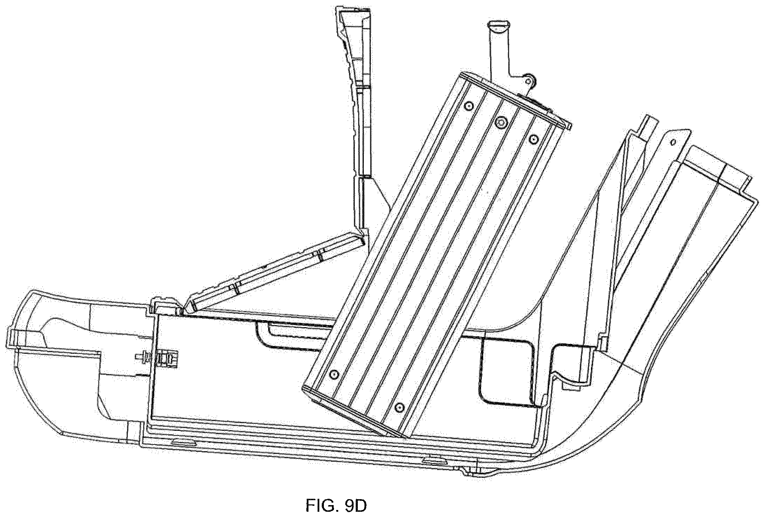

The guiding recesses 73 have front ends provided with a notch 76 defining a rest or locking position for the slider pins 72 when they reach the front end of the guiding recess 73. When the slider pins 72 rest in the notches 76, the top plate 62 is maintained in the open position. In this position of the top plate 62 a user can pick up the handle 59 of one of the batteries 58 in the battery box 61, as shown in Figure 9A. By lifting the handle 59 the battery 58 is tilted to an upright position enabling the user to lift the battery 58 for further removal, as shown step by step in Figures 9A-E. The movement of the rear and front top plate sections 63, 68 provide a large opening angle of the front top plate section 68 allowing easy access to the battery box interior without being hindered by the seat 13 or the frame 2.

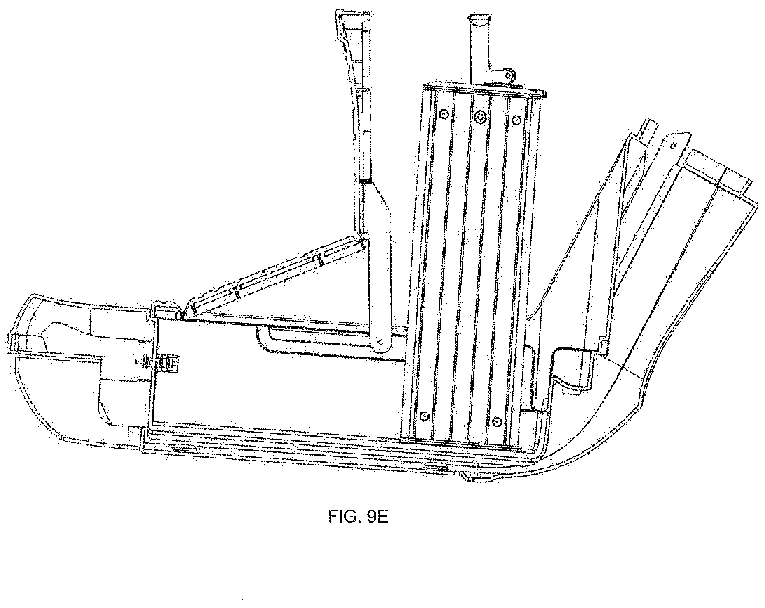

Subsequently, the user can place a new battery 58. The lower end of the battery 58 is placed in the front end of the battery box 61 in a position as shown in Figure 9E and tilted by sliding the lower end of the battery to the rear side (sliders below the rear end of the battery facilitate this sliding movement) until the battery lays down on the battery box bottom, as in Figure 9A. This tilting and sliding movement is enabled by the upwardly pivoted position of the rear top plate section 63. The user can then slightly lift the top plate 62 to release the slider pins 72 from the respective notches 76 in the guiding recesses 73, enabling the slider pins 72 to slide in a rearward direction via the guiding recesses 73 to move the top plate 62 down to a flat horizontal position.

As shown in Figure 9A the handle 59 is received in a recess 77 in the inner wall of the battery box 61 when the battery 58 is in its use position. The handle 59 is provided with a triangular wing 78, pointing downwardly when the battery 58 lays down in the battery box 61. The wing 78 has a tip 79 engaging the inner wall 81 of the battery box 61 just below the edge of the handle receiving recess 77. By tilting down the handle 59 into the handle receiving recess 77, the tip 79 is moved down forcing the battery 58 to move towards the opposite side of the battery box 61 against a battery contact 82. This way, the battery 58 is firmly clamped in its use position without any freedom of movement.

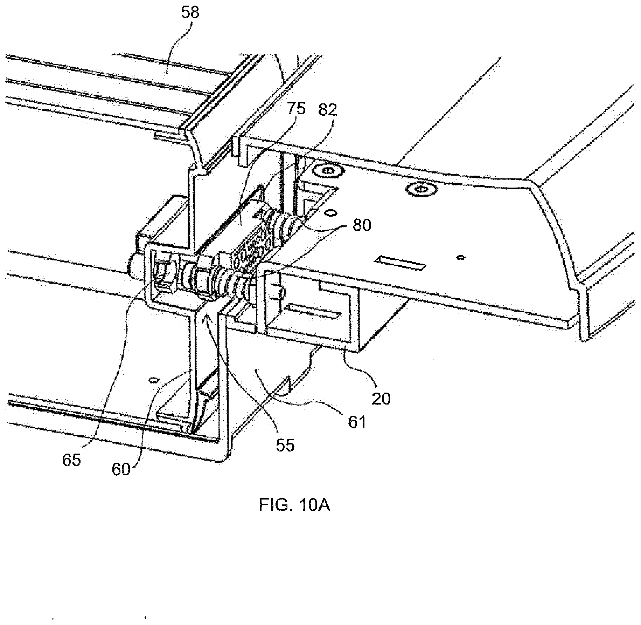

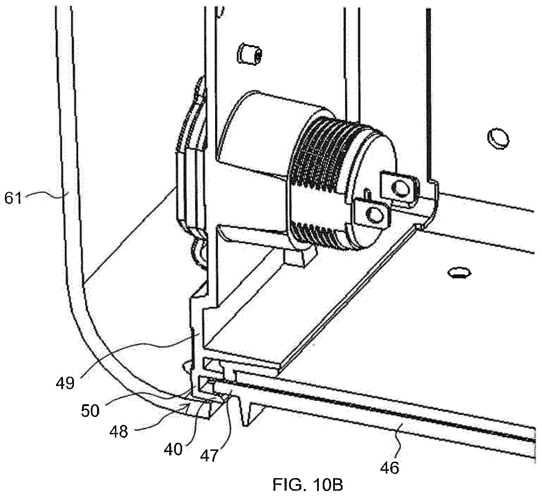

Figure 10A shows the battery contact 82 in more detail. The battery contact 82 comprises a connector block 75 supported by the cross member 20 by means of two compression springs 80. The battery 58 has an end face 60 with a counter connector block 65 in a receiving cavity 55. When the battery 58 is positioned into the battery box 61, the connector block 75 slides into the receiving cavity 55. When the handle 59 is subsequently tilted down into the handle receiving recess 77, the connector block 75 and the counter connector block 65 are connected and pushed backward against the action of the compression springs 80. The force exerted by the compression springs 80 improves electro-conductive contact between the two connector blocks 65, 75.

The bottom of the battery box 61 comprises one, or optionally more, elevated strip sections 46 extending in a longitudinal direction of the battery box 61. At the front side of the battery box 61, the elevated strip section has a free end 47 with a vertical gap 48 between the free end of the strip section 46 and the adjacent part of the bottom of the battery box 61. The battery 58 has a front wall 49 with a lower edge 50 comprising a rearwardly projecting horizontal lower lip 40 forming a tight fit with the vertical gap 48 in the battery box bottom. When the battery 58 is placed into the battery box 61, the lower lip 40 of the battery 58 rests on the bottom of the battery box 61 just in front of the vertical gap 47. When the handle 59 is tilted into the handle receiving recess 77, the lip 40 slides into the vertical gap 47 to lock the battery 58 in its position.

Returning to Figure 1, the head set 11 on the frame 2 holds the steering frame 4 in a manner allowing rotation about a steering axis to steer the motor scooter 1. The steering frame 4 comprises a top end extending above the head set 11 with a handle bar 82. The handle bar 82 has grips 83 at its two ends, and a steer top housing 84 between the two grips 83. The steer top housing 84 has an upper face with a display 86 angled towards a driver to be in the drivers viewing scope. The display 86 may for example be an LCD display and may provide information about speed, time, position, battery charge, and/or navigation instructions or any other suitable type of information. The steer top housing 84 may also be provided with other control elements, e.g., for the headlight, the direction indicators, or for unlocking the seat. Hand brakes 87 are arranged within reach of the drivers hands on the grips 83. A headlight 88 is integrated in the steer top housing 84 downwardly directed to provide appropriate illumination in front of the motor scooter 1. The steer top housing 84 encases electronics and wirings associated with the various control elements on the outer surface of the steer top housing 84.

Below the lower end of the head set pipe 21 the steering frame 4 is connected to a front fork 89 (see Figure 3) suspending the front wheel 6 and holding a front fender 91 over the front wheel 6.

As shown in Figure 2, a front part 92 of the seat 13 of the motor scooter 1 rests on the upper part 32 of the rear section 12 of the frame 2. A rear part 93 of the seat 13 rests on the triangular supports 33 and is girdled by a backwardly extending bow 94.

A large storage box 96 hangs down from the upper part 32 of the rear section 12 of the frame 2 and is closed off by the front part 92 of the seat. The storage box 96 can, e.g., be a closed box, a bag or a basket. In the embodiment shown in the drawings the large storage box 96 provides sufficient storage space for larger objects such as a motor scooter helmet (not shown). If so desired, the motor scooter 1 can also be provided with a smaller storage box, leaving more open space below the seat, which can be used for carrying objects on the footboard 9, such as a beer crate or similar cargo. The shape of the frame 2 allows storage of cargo below the seat 13.

Below the rear part 93 of the seat 13 is a rear storage box 97, which is smaller than the front storage box 96 and can be used for storing smaller objects such as a chain lock for the motor scooter. The bow 94 extends around the upper edge of the rear storage box 97.

If so desired, the rear storage box 97 may be provided with a docket for a mobile telephone, for instance powered by the motor scooters' batteries. The telephone may be stored in the front storage box 96 and be connected to the docket through a charging cable which is guided from the front storage box 96 to the rear storage box 97 through small slits. The telephone may for example be within the scope of compatible communicative data processing modules, e.g. for navigation purposes.

The rear storage box 97 has a back side provided with a connection for a license plate 98 flanked by a pair of direction indicators 99 and or rear lights.

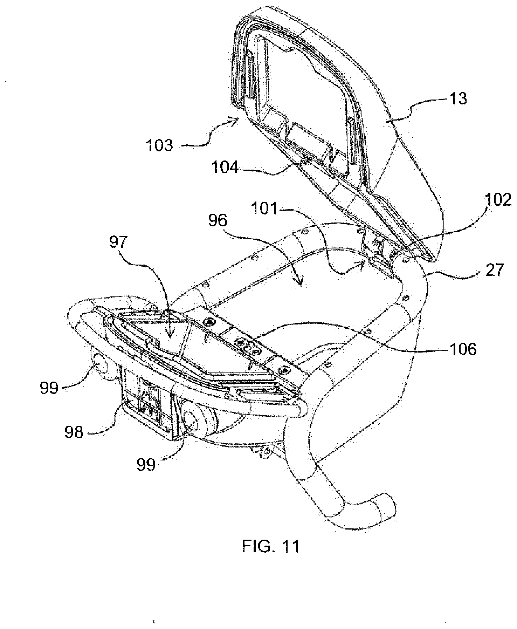

To allow access to the storage boxes 96, 97, the seat 13 can be hinged upwardly, as shown in Figure 11. The terminal seat end section 27 of the frame 2 comprises a centrally positioned recess 101 receiving a hinge 102 connected to the front tip of the lower face 103 of the seat 13. The lower face 103 of the seat is profiled to close off the front and rear storage boxes 96, 97 when the seat 13 is in its use position.

To secure the seat 13 in the position of use the seat 13 is provided with a lock comprising a locking pin 104 extending from the lower face 103 of the seat 13 to cooperate with a locking hole 106 centrally located in the first cross member 16. The lock is provided with a release mechanism (not shown). The handle bar 82 or another part at the front of the frame 2 is provided with a key operated lock and control element (not shown) to activate the release mechanism.

A cable (not shown) for actuating the release mechanism of the lock runs from the power electronics 56 to the release mechanism. The cable is hidden from view in the interior of the lateral frame sections 23. To this end the frame sections 23 are provided with a first passage opening 105 where the frame section 23 is connected to the fifth cross member 20. The fifth cross member 20 comprises two top flanges 22 flanking the passage opening 105 to provide local reinforcement of the frame 2 at the position of the passage opening 105. This way, local weakening of the frame 2 by the passage opening 105 is effectively repaired.

The cable runs from the passage opening 105 to a second passage opening 110 in the frame section 23 where the frame section 23 is connected to the second cross member 17. The passage opening 110 is fully surrounded by the connected end of the second cross member 17, providing local reinforcement of the frame section 23 at the position of the passage opening 110.

The second cross member 17 is provided with a third passage opening 115 at short distance from the second passage opening 110. From there the cable runs via a channel in the wall of the front storage box 96 to the release mechanism at the lock hole 106.

The fifth cross member 20 is provided with connection flanges 107 (see Figure 4) at its lower side connected to suspension bars 108 at either side of the rear wheel 3. The two suspension bars 108 have rear ends connected to a wheel hub 109 of the rear wheel 3. Shock absorbers 111 extend between a connection to the brackets 37 at the lower side of the second cross member 17 and a connection 112 to the suspension bars, such that the shock absorbers 111, the lower part 29 of the frame's rear section 12 and the suspension bar 108 form a substantially equilateral triangle. Other suitable configurations can also be used, if so desired.

A rear fender 113 is spaced from the rear wheel 3 and fixed by connection to the suspension bars 108. The rear fender 113 is provided with a rear light 114, the associated wiring being integral with the rear fender 113.

A foldable stand 116 connected to the rear lower edge of the footboard 9 can be hinged between a stand position and a folded position, as shown in Figure 2. In the folded position the stand 116 is in line with the suspension bars 108, having a bent tip 117 to enable foot operation.

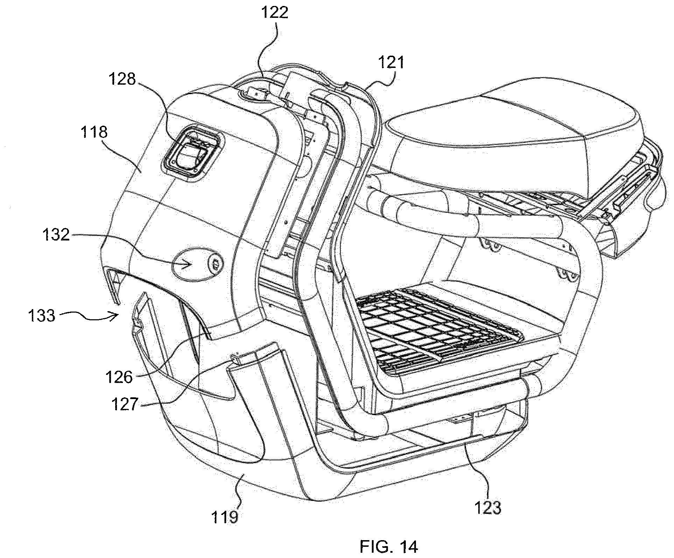

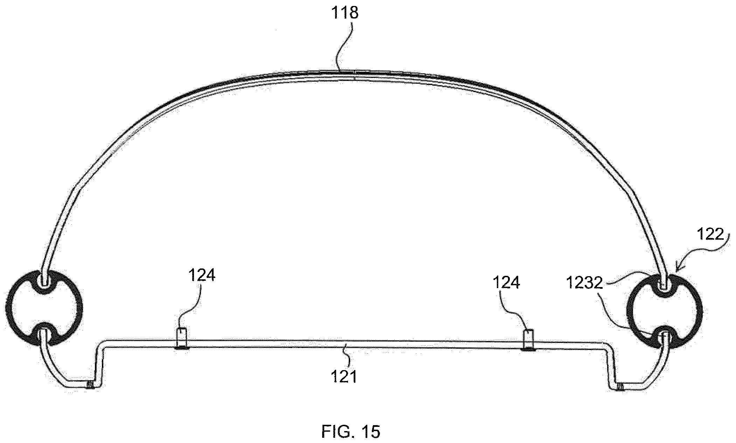

The interior of the motor scooter body is shielded by plastic cover panels 118-121, shown in exploded view in Figure 14. The tubular frame loop 7 is provided with slits 122 extending in axial direction of the respective tube parts. These slits 122 are only present in tube parts bordering the cover panels 118-121. The slits 122 are configured to receive edges 123 of the cover panels 118-121, as shown in Figure 15, which is a schematic cross section of the cover panels 118, 121 and the frame 2 at the front section 10. The edge sections 123 are offset from the outer surface of the cover plates 118-121 to hide the slits 122 when the cover plates 118-121 have been mounted. In the embodiment shown, the cover panel edges 123 merely slide into the slits 122 without forming a click or snap joint or a similar joint, since such a connection would result in complex stress patterns. The actual fixing of the cover panels 118-121 can take place by screws or bolts 124 attaching the cover panels 118-121 to the frame 2, to each other or to other parts of the motor scooter 1. The cover panels 118-121 join each other with overlapping parts 126, 127 to provide a smooth, tight and gap free connection between the cover panels 118-121.

The slits 122 in the frame tubes are substantially hidden from view by the mounted cover panels 118-121, as they cover the slits 122, especially if the panel edges 123 entering the slits 122 are slightly offset with respect to the outer surface of the cover panels 118-121. In frame sections where no cover panels are present, for instance behind the lower cover panel 119, the frame tubes are free from slits, so that it is not visible from the outside how the cover panels are mounted.

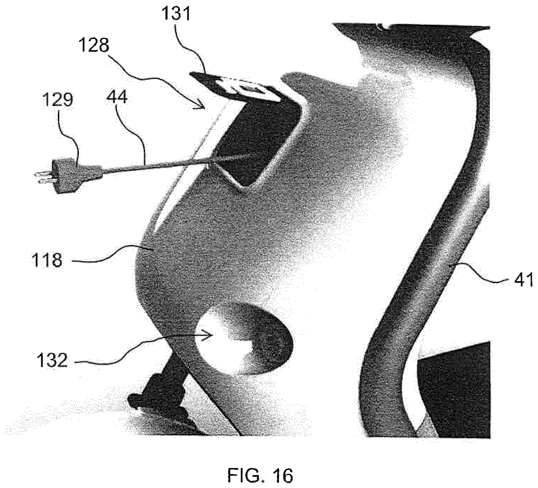

A front cover panel 118 covers the front side of the front section 10. The front cover panel 118 has a centrally positioned square plug opening 128 allowing access to a connector plug 129 of the self-winding charge cable 44 (see Figure 16). The plug opening 128 can be closed by a hinging flap 131, resiliently biased to a closed position. Two symmetrically arranged openings 132 below the square plug opening 128 reveal flashers of the direction indicators 45.

The lower side of the motor scooter 1 is covered by a lower cover panel 119. The lower edge of the front cover panel 118 and the upper edge of the lower cover panel 119 are recessed for jointly defining a passage 133 for the front fork 89 allowing adequate steering movement (see Figure 3).

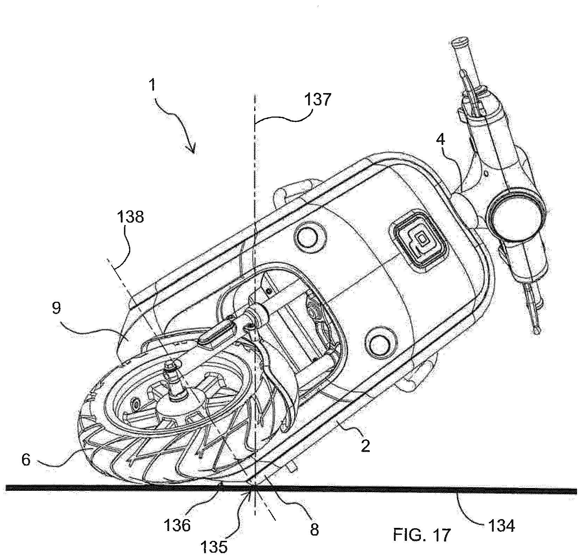

Due to the weight of the batteries 58 and other components of the drive train, the centre of gravity of the motor scooter 1 is positioned low, more particular at the level of the footboard or lower. Figure 17 shows the motor scooter 1 in front view in a fallen position. A tangent line 134 between the front wheel and a tangency point 135 of the main frame 2 is not crossed by a front view contour line of the motor scooter 1. The battery box 61 has lower outer edges 136 chamfered to keep distance from the tangent line 134. When the motor scooter 1 falls aside the frame section 8 with the tangency point 135 hits the ground and absorbs the impact load, thus protecting the cover panels 118-121 and other parts of the motor scooter 1.

A balance line 137 crosses the tangent line 134 perpendicularly at the tangency point 135 of the main frame 2. The motor scooter 1 has a center of gravity positioned at the same side of the balance line 137 as the lower side of the battery box 61. As a result, the motor scooter 1 will be stabilized in its position where it rests on the tangency point 135 with the steering frame 4 and front wheel 6 being slightly tilted towards the falling direction.

Even if the falling speed of the motor scooter is such that it will fall further aside than the position shown in Figure 17, it will tend to bounce back into this position. This is achieved by positioning the center of gravity of the motor scooter 1 below a second balance line 138 which runs vertically through the tangency point 135 of the main body when the motor scooter lays flat down on a surface. This second balance line 138 is positioned between the center of gravity and the steering handle bar 82 of the motor scooter.

## Claims

1. Motor scooter (1) comprising a main frame (2) with frame sections (23) extending along an outline of the motor scooter, the frame sections being bridged by cross members (16-20) supporting electric drive modules (56, 58) between the frame sections,
**characterized in that** in front view of the motor scooter in a fallen position a tangent line (134) between a front wheel (6) and a tangency point (135) of the main frame (2) is not crossed by a front view contour line of the motor scooter (1), the motor scooter further comprising a battery box (61) extending at least partly below the tangency point (135) of the main frame,
wherein the battery box has lower outer edges (136) chamfered to keep distance from the tangent line, wherein a balance line (137) crosses the tangent line (134) perpendicularly at the tangency point (135) of the main frame,
wherein the motor scooter has a center of gravity positioned at the same side of the balance line as the lower side of the motor scooter.

2. Motor scooter according to claim 1, wherein the frame sections (23) form a one-piece tubular loop (7).

3. Motor scooter according to claim 1 or 2, wherein the electric drive modules supported by the cross members include one or more removable batteries (58) and/or power electronics (56) and/or a charging unit (53).

4. Motor scooter according to any one of the preceding claims, wherein one or more of the electric drive modules are thermo-conductively connected to the main frame (2).

5. Motor scooter according to any one of the preceding claims, wherein the battery box (61) holding at least one battery (58) is suspended between opposite sections (8) of the main frame to form a footboard (9).

6. Motor scooter according to claim 5, wherein the battery box (61) comprises an openable top plate (62).

7. Motor scooter according to claim 6, wherein the battery box (61) is provided with a sliding guide (73) guiding slider elements (71) on extensions of the top plate (62) to allow movement of the top plate between a closing position closing off the battery box (61), and an upward position, enabling vertical insertion and subsequent tilting of the battery (58) into the battery box.

8. Motor scooter according to claim 7, wherein the top plate (62) is divided into a rear top plate portion (63) and a front top plate portion (68), the rear top plate portion being pivotable with respect to the battery box and the front top plate portion being pivotable with respect to the rear top plate portion, the movement of the front top plate portion being determined by the slider elements (71, 71) and the rear top plate portion.

9. Motor scooter according to claim 7 or 8, wherein the battery comprises a handle (59) received in a recess (77) in the battery box.

10. Motor scooter according to any one of the preceding claims, wherein one or more of the frame sections (23) of the main frame (2) comprise at least one recess, such as a slit (122) extending in axial direction of the respective frame section, the at least one recess (122) receiving edge sections (123) of one or more cover panels (118-121).

11. Motor scooter according to claim 1, wherein in front view a second balance line (138) runs vertically through the tangency point (135) of the main frame when the motor scooter lays flat down on a surface, the second balance line being positioned between the center of gravity and a steering handle bar (82).

12. Motor scooter according to any one of the preceding claims, wherein the center of gravity of the motor scooter is at the level of the battery box (61).

## Patentansprüche

1. Motorroller (1), der einen Hauptrahmen (2) mit Rahmenabschnitten (23) aufweist, die sich entlang eines Umrisses des Motorrollers erstrecken, wobei die Rahmenabschnitte von Querstreben (16-20) überbrückt werden, die elektrische Antriebsmodule (56, 58) zwischen den Rahmenabschnitten tragen,
**dadurch gekennzeichnet, dass** in Vorderansicht des Motorrollers in gefallener Position eine Tangente (134) zwischen einem Vorderrad (6) und einem Tangentialpunkt (135) des Hauptrahmens (2) nicht von einer Vorderansichtskonturlinie des Motorrollers (1) geschnitten wird,
wobei der Motorroller ferner einen Batteriekasten (61) aufweist, der sich zumindest teilweise unter dem Tangentialpunkt (135) des Hauptrahmens erstreckt,
wobei der Batteriekasten untere Außenkanten (136) hat, die abgeschrägt sind, um von der Tangente beabstandet zu bleiben,
wobei eine Gleichgewichtslinie (137) die Tangente (134) senkrecht am Tangentialpunkt (135) des Hauptrahmens schneidet,
wobei der Motorroller einen Schwerpunkt hat, der sich auf derselben Seite der Gleichgewichtslinie wie die Unterseite des Motorollers befindet.

2. Motorroller nach Anspruch 1, wobei die Rahmenabschnitte (23) eine einstückige, röhrenförmige Schleife (7) bilden.

3. Motoroller nach Anspruch 1 oder 2, wobei die von den Querstreben getragenen elektrischen Antriebsmodule eine oder mehrere entnehmbare Batterien (58) und/oder Leistungselektronik (56) und/oder eine Ladeeinheit (53) umfassen.

4. Motorroller nach einem der vorhergehenden Ansprüche, wobei eines oder mehrere der elektrischen Antriebsmodule wärmeleitend mit dem Hauptrahmen (2) verbunden sind.

5. Motorroller nach einem der vorhergehenden Ansprüche, wobei der mindestens eine Batterie (58) tragende Batteriekasten (61) zwischen gegenüberliegenden Abschnitten (8) des Hauptrahmens aufgehängt ist, um ein Trittbrett (9) zu bilden.

6. Motorroller nach Anspruch 5, wobei der Batteriekasten (61) eine öffenbare Abdeckplatte (62) aufweist.

7. Motorroller nach Anspruch 6, wobei der Batteriekasten (61) mit einer Gleitführung (73) versehen ist, die Gleitelemente (71) an Verlängerungen der Abdeckplatte (62) führt, um ein Verschieben der Abdeckplatte zwischen einer Verschlussposition, die den Batteriekasten (61) verschließt, und einer aufrechten Position, die senkrechtes Einführen und anschließendes Kippen der Batterie (58) in den Batteriekasten zulässt, zu ermöglichen.

8. Motorroller nach Anspruch 7, wobei die Abdeckplatte (62) in einen hinteren Abdeckplattenabschnitt (63) und einen vorderen Abdeckplattenabschnitt (68) unterteilt ist, wobei der hintere Abdeckplattenabschnitt relativ zum Batteriekasten schwenkbar ist und der vordere Abdeckplattenabschnitt relativ zum hinteren Abdeckplattenabschnitt schwenkbar ist, wobei das Verschieben des vorderen Abdeckplattenabschnitts durch die Gleitelemente (71, 71) und den hinteren Abdeckplattenabschnitt bestimmt wird.

9. Motorroller nach Anspruch 7 oder 8, wobei die Batterie einen in einer Aussparung (77) des Batteriekastens aufgenommenen Griff (59) aufweist.

10. Motorroller nach einem der vorhergehenden Ansprüche, wobei einer oder mehrere der Rahmenabschnitte (23) des Hauptrahmens (2) mindestens eine sich in Axialrichtung des entsprechenden Rahmenabschnitts erstreckende Aussparung, wie einen Schlitz (122), aufweisen, wobei die mindestens eine Aussparung (122) Kantenabschnitte (123) einer oder mehrerer Abdeckplatten (118-121) aufnimmt.

11. Motorroller nach Anspruch 1, wobei in Vorderansicht eine zweite Gleichgewichtslinie (138) senkrecht durch den Tangentialpunkt (135) des Hauptrahmens verläuft, wenn der Motorroller flach auf einem Untergrund liegt, wobei sich die zweite Gleichgewichtslinie zwischen dem Schwerpunkt und einem Lenkstangengriff (82) befindet.

12. Motorroller nach einem der vorhergehenden Ansprüche, wobei der Schwerpunkt des Motorollers auf Höhe des Batteriekastens (61) liegt.

## Revendications

1. Scooter (1) comprenant un cadre principal (2) avec des sections de cadre (23) s'étendant le long d'un contour du scooter, les sections de cadre étant reliées par des traverses (16 à 20) supportant des modules de commande électrique (56, 58) entre les sections de cadre,
**caractérisé en ce que** dans une vue de face du scooter en position allongée, une ligne tangente (134) entre une roue avant (6) et un point de tangence (135) du cadre principal (2) n'est pas croisée par une ligne de contour en vue de face du scooter (1),
le scooter comprenant en outre un boîtier de batterie (61) s'étendant au moins partiellement en dessous du point de tangence (135) du cadre principal,
dans lequel le boîtier de batterie a des bords externes inférieurs (136) chanfreinés de sorte à maintenir une distance par rapport à la ligne tangente,
dans lequel une ligne d'équilibre (137) croise la ligne tangente (134) perpendiculairement au niveau du point de tangence (135) du cadre principal,
dans lequel le scooter a un centre de gravité situé au niveau du même côté de la ligne d'équilibre que le côté inférieur du scooter.

2. Scooter selon la revendication 1, dans lequel les sections de cadre (23) forment une boucle tubulaire en une seule pièce (7).

3. Scooter selon la revendication 1 ou 2, dans lequel les modules de commande électrique supportés par les traverses comprennent une ou plusieurs batteries amovibles (58) et/ou éléments électroniques de puissance (56) et/ou une unité de charge (53).

4. Scooter selon l'une quelconque des revendications précédentes, dans lequel un ou plusieurs des modules de commande électrique sont connectés de manière thermiquement conductrice au cadre principal (2).

5. Scooter selon l'une quelconque des revendications précédentes, dans lequel le boîtier de batterie (61) contenant au moins une batterie (58) est suspendu entre des sections opposées du cadre principal de sorte à former un panneau de plancher (9).

6. Scooter selon la revendication 5, dans lequel le boîtier de batterie (61) comprend une plaque supérieure ouvrante (62).

7. Scooter selon la revendication 6, dans lequel le boîtier de batterie (61) est doté d'un guide de coulissement (73) guidant des éléments coulissants (71) sur des extensions de la plaque supérieure (62) pour permettre le déplacement de la plaque supérieure entre une position de fermeture fermant le boîtier de batterie (61) et une position orientée vers le haut permettant l'insertion verticale et l'inclinaison subséquente de la batterie (58) dans le boîtier de batterie.

8. Scooter selon la revendication 7, dans lequel la plaque supérieure (62) est divisée en une partie de plaque supérieure arrière (63) et une partie de plaque supérieure avant (68), la partie de plaque supérieure arrière pouvant pivoter par rapport au boîtier de batterie et la partie de plaque supérieure avant pouvant pivoter par rapport à la partie de plaque supérieure arrière, le déplacement de la partie de plaque supérieure avant étant déterminé par les éléments coulissants (71, 71) et la partie de plaque supérieure arrière.

9. Scooter selon la revendication 7 ou 8, dans lequel la batterie comprend une poignée (69) reçue dans un évidement (77) dans le boîtier de batterie.

10. Scooter selon l'une quelconque des revendications précédentes, dans lequel une ou plusieurs des sections de cadre (23) du cadre principal (2) comprennent au moins un évidement, tel qu'une entaille (122) s'étendant dans une direction axiale de la section de cadre respective, l'au moins un évidement (122) recevant des sections de bord (123) d'un ou plusieurs panneaux de carénage (118-121).

11. Scooter selon la revendication 1, dans lequel en vue de face une seconde ligne d'équilibre (138) s'étend verticalement à travers le point de tangence (135) du cadre principal lorsque le scooter repose à plat sur une surface, la seconde ligne d'équilibre étant positionnée entre le centre de gravité et un guidon de direction (82).

12. Scooter selon l'une quelconque des revendications précédentes, dans lequel le centre de gravité du scooter est au niveau du boîtier de batterie (61).
